# EUROPÄISCHE PATENTSCHRIFT

(11) **EP 1 012 211 B1**
(45) Veröffentlichungstag und Bekanntmachung des Hinweises auf die Patenterteilung: **28.05.2003**
(21) Anmeldenummer: 98946349.2
(22) Anmeldetag: 17.08.1998
(51) Int. Cl.: C09D 9/00

(54) **VERWENDUNG VON FETTSÄURENIEDRIGALKYLESTERN IN ABBEIZMITTELN**
USE OF LOW FATTY ACID ALKYL ESTERS IN STRIPPING AGENTS
UTILISATION D'ESTERS D'ALKYLE INFERIEUR D'ACIDE GRAS DANS DES DECAPANTS-SOLVANTS

(30) Priorität: 26.08.1997 DE 19737071
(43) Veröffentlichungstag der Anmeldung: 28.06.2000
(73) Patentinhaber: Cognis Deutschland GmbH & Co. KG, 40589 Düsseldorf (DE)
(72) Erfinder: FELIX, Gérard, F-91540 Mennecy (FR); LE HEN FERRENBACH, Catherine, F-77100 Meaux (FR)
(86) Internationale Anmeldenummer: EP9805188
(87) Internationale Veröffentlichungsnummer: WO99010438

(56) Entgegenhaltungen:
- EP-A- 0 616 016
- EP-A- 0 629 671
- WO-A-96/27642
- DE-A- 19 526 351
- US-A- 5 340 495

## Beschreibung

### Einleitung

Die Erfindung betrifft die Verwendung von Fettsäureniedrigalkylestern, insbesondere von Fettsäuremethylestern in Abbeizmitteln sowie Abbeizmittel enthaltend Fettsäureniedrigalkylester.

### Stand der Technik

Abbeizmittel sind gemäß der DIN 55 945 "alkalische, saure oder neutrale Mittel, die auf eine getrocknete Beschichtung aufgebracht diese so erweichen, daß sie vom Untergrund entfernt werden kann". Abbeizmittel können sowohl flüssig als auch pastös sein. Aus dem Stand der Technik sind sowohl Abbeizmittel auf Basis organischer als auch solche auf Basis anorganischer Komponenten bekannt.

Gerade aus dem Bereich des Abbeizens von Möbeln sind die sogenannten Laugen bekannt, alkalische Abbeizmittel auf Basis von Natronlauge. Demgegenüber sind saure Abbeizmittel von eher geringerer Bedeutung.

Auf Basis organischer Verbindungen sind insbesondere Abbeizmittel enthaltend Methylenchlorid bekannt; daneben auch solche basierend auf Toluol, Aceton oder Methyl-Ethyl-Keton. Diese sind jedoch gesundheitlich bedenklich und daher kennzeichnungspflichtig, teilweise sind diese Stoffe sogar als reizend oder brennbar einzustufen. Im Rahmen der weiteren Entwicklung wurde in letzter Zeit eine Alternative auf Basis von Dimethylsolfoxid (DMSO) entwickelt. Bei Beibehaltung der anwendungstechnischen Eigenschaften, wie schnelles Lösen unterschiedlichster Farben von verschiedenen Untergründen bietet DMSO eine toxikologisch sicherere Alternative (Physique et Chimie des Peintures et Adhesifs N° 467 - 468, 1995, p. 25 - 28). Aus der EP 0 616 016 A1 sind Abbelzmittel auf Basis chlorfreier organischer Lösungsmittel bekannt, wobei auch konkret Ölsäuremethylester offenbart werden.

Die komplexe Aufgabe der vorliegenden Erfindung war es neue toxikologisch unbedenkliche Abbeizmittel zur Verfügung zu stellen, die gleichzeitig gute anwendungstechnische Eigenschaften aufweisen, insbesondere die Ablösung unterschiedlichster Beschichtungen auch bei feuchter Umgebung ermöglichen und sich dadurch auszeichnen, daß die abbeizende Wirkung über einen langen Zeitraum erhalten bleibt, d.h. insbesondere zum Abbeizen großer Flächen geeignet ist.

### Beschreibung der Erfindung

Gegenstand der Erfindung ist demnach die Verwendung eines Abbeizmittels, enthaltend
(a) 70 bis 90 Gew.-% Fettsäureniedrigalkylester der Formel (I),

   R¹CO-OR² (I)

   in der R¹CO für einen linearen oder verzweigten, gesättigten und/oder ungesättigten Alkylrest mit 6 bis 22 Kohlenstoffatomen und R² für einen linearen oder verzweigten Alkylrest mit 1 bis 8 Kohlenstoffatomen steht, und
(b) 10 bis 20 Gew.-% Lösungsmittel ausgewählt aus der Gruppe, die gebildet wird von niederen Alkoholen, Kohlenwasserstoffen und/oder Dimethylsulfoxid.

Es wurde gefunden, dass Fettsäureniedrigalkylester, insbesondere -methylester, die toxikologisch als unbedenklich einzustufen sind, hervorragende anwendungstechnische Eigenschaften als Abbeizmittel aufweisen wenn sie in Kombination mit den unter (b) aufgeführten Lösungsmitteln eingesetzt werden. Diese Mittel zeichnen sich insbesondere durch ihre gute Langzeitwirkung, sowie ihre geringe Flüchtigkeit aus. Unter Langzeitwirkung ist dabei zu verstehen, dass nach dem Auftragen der erfindungsgemäßen Abbeizmittel, beispielsweise auf großen Flächen, auch die zu Beginn behandelten Flächen sich noch gut ablösen lassen und noch nicht eingetrocknet sind, wie dies bei Verwendung von Abbeizmitteln die aus dem Stand der Technik bekannt sind, häufig vorkommt. Aufgrund der geringen Flüchtigkeit ist die Handhabung auch verbraucherfreundlicher. Die gute ökologische Verträglichkeit der Mittel ist insofern von Bedeutung, als daß die behandelten Flächen häufig mit Wasser abgespült werden, und die Abbeizmittel somit in die Umgebung gelangen.

Besonders Methylenchlorid und DMSO lassen sich durch Fettsäurealkylester in Abbeizmitteln substituieren.

### Fettsäurealkylester

Erfindungsgemäß können als Fettsäurealkylester Ester der Fettsäuren mit 6 bis 22 C-Atomen mit Alkoholen mit 1 bis 8 C-Atomen eingesetzt werden.

Unter Fettsäuren sind dabei aliphatische Carbonsäuren der Formel **(II)** zu verstehen,

**R**^{**1**}**CO-OH** (II)

in der R¹CO für einen aliphatischen, linearen oder verzweigten, gesättigten und/oder ungesättigten Acylrest mit 6 bis 22 steht.

Typische Beispiele sind Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen, die z.B. bei der Druckspaltung von natürlichen Fetten und Ölen, bei der Reduktion von Aldehyden aus der Roelen'schen Oxosynthese oder der Dimerisierung von ungesättigten Fettsäuren anfallen.

Vorzugsweise werden die Ester der C₈ bis C₁₈-Fettsäuren mit C₁ bis C₈ Alkoholen, insbesondere linearen C₁ bis C₄ und/ oder verzweigten bis C₃ bis C₈ Alkoholen eingesetzt. Besonders bevorzugt werden 2-Ethylhexyl-, Ethyl-, Butyl sowie Isopropylester eingesetzt, insbesondere jedoch Fettsäuremethylester.

Neben den erfindungsgemäß einzusetzenden Fettsäurealkylestern können die Abbeizmittel im Rahmen der vorliegenden Erfindung noch die üblichen aus dem Stand der Technik bekannten Substanzen enthalten, wie sie beispielsweise im Kirk-Othmer (3.) **16**, 762 bis 768 und (4.) **17**, 1069 bis 1082 aufgeführt sind. Im folgenden seien die Hauptbestandteile exemplarisch aufgeführt:

### Lösungsmittel

Als Lösungsmittel können die üblichen bekannten Substanzen, wie niedere Alkohole oder auch Kohlenwasserstoffe eingesetzt werden. Besonders bevorzugt ist die Verwendung von DMSO als Lösungsmittel.

### Emulgatoren

Emulgatoren sind bedeutende Bestandteile, um die Abbeizmittel nach der Anwendung beispielsweise mit Wasser vom Objekt zu entfernen.

Als Emulgatoren bzw. Co-Emulgatoren können nichtionogene, ampholytische und/ oder zwitterionische grenzflächenaktive Verbindungen verwendet werden, die sich durch eine lipophile, bevorzugt lineare, Alkyl- oder Alkenylgruppe und mindestens eine hydrophile Gruppe auszeichnen. Diese hydrophile Gruppe kann sowohl eine ionogene als auch eine nichtionogene Gruppe sein.

Nichtionogene Emulgatoren enthalten als hydrophile Gruppe z. B. eine Polyolgruppe, eine Polyalkylenglycolethergruppe oder eine Kombination aus Polyol- und Polyglycolethergruppe. Bevorzugt sind solche Mittel, die als **O/W-Emulgatoren** nichtionogene Tenside aus mindestens einer der folgenden Gruppen enthalten: (a1) Anlagerungsprodukte von 2 bis 30 Mol Ethylenoxid und/ oder 0 bis 5 Mol Propylenoxid an lineare Fettalkohole mit 8 bis 22 C-Atomen, an Fettsäuren mit 12 bis 22 C-Atomen und an Alkylphenole mit 8 bis 15 C-Atomen in der Alkylgruppe; (a2) C_{12/18}-Fettsäuremono- und -diester von Anlagerungsprodukten von 1 bis 30 Mol Ethylenoxid an Glycerin; (a3) Glycerinmono- und - diester und Sorbitanmono- und -diester von gesättigten und ungesättigten Fettsäuren mit 6 bis 22 Kohlenstoffatomen und deren Ethylenoxidanlagerungsprodukte; (a4) Alkylmono- und -oligoglycoside mit 8 bis 22 Kohlenstoffatomen im Alkylrest und deren ethoxylierte Analoga und (a5) Anlagerungsprodukte von 15 bis 60 Mol Ethylenoxid an Ricinusöl und/oder gehärtetes Ricinusöl; (a6) Polyol- und insbesondere Polyglycerinester wie z.B. Polyglycerinpolyricinoleat oder Polyglycerinpoly-12-hydroxystearat. Ebenfalls geeignet sind Gemische von Verbindungen aus mehreren dieser Substanzklassen. Die Anlagerungsprodukte von Ethylenoxid und/oder von Propylenoxid an Fettalkohole, Fettsäuren, Alkylphenole, Glycerinmono- und -diester sowie Sorbitanmono- und -diester von Fettsäuren oder an Ricinusöl stellen bekannte, im Handel erhältliche Produkte dar. Es handelt sich dabei um Homologengemische, deren mittlerer Alkoxylierungsgrad dem Verhältnis der Stoffmengen von Ethylenoxid und/ oder Propylenoxid und Substrat, mit denen die Anlagerungsreaktion durchgeführt wird, ent-spricht. C_{12/18}-Fettsäuremono- und -diester von Anlagerungsprodukten von Ethylenoxid an Glycerin sind aus **DE-PS 20 24 051** als Rückfettungsmittel für kosmetische Zubereitungen bekannt. C_{8/18}-Alkylmono- und oligoglycoside, ihre Herstellung und ihre Verwendung als oberflächenaktive Stoffe sind beispielsweise aus **US 3,839,318, US 3,707,535, US 3,547,828, DE-OS 19 43 689, DE-OS 20 36 472** und **DE-A1 30 01 064** sowie **EP-A 0 077 167** bekannt. Ihre Herstellung erfolgt insbesondere durch Umsetzung von Glucose oder Oligosacchariden mit primären Alkoholen mit 8 bis 18 C-Atomen. Bezüglich des Glycosidrestes gilt, daß sowohl Monoglycoside, bei denen ein cyclischer Zuckerrest glycosidisch an den Fettalkohol gebunden ist, als auch oligomere Glycoside mit einem Oligomerisationsgrad bis vorzugsweise etwa 8 geeignet sind. Der Oligomerisierungsgrad ist dabei ein statistischer Mittelwert, dem eine für solche technischen Produkte übliche Homologenverteilung zugrunde liegt. Weiterhin können als Emulgatoren zwitterionische Tenside verwendet werden. Als zwitter-ionische Tenside werden solche oberflächenaktiven Verbindungen bezeichnet, die im Molekül mindestens eine quartäre Ammoniumgruppe und mindestens eine Carboxylat- und eine Sulfonatgruppe tragen. Ebenfalls geeignete Emulgatoren sind ampholytische Tenside. Unter ampholytischen Tensiden werden solche oberflächenaktiven Verbindungen verstanden, die außer einer C_{8/18}-Alkyl- oder -Acylgruppe im Molekül mindestens eine freie Aminogruppe und mindestens eine -COOH- oder -SO₃H-Gruppe enthalten und zur Ausbildung innerer Salze befähigt sind.

Daneben können noch die üblichen Aktivatoren, Verdicker und insbesondere Korrosionsinhibitoren enthalten sein.

Unter Aktivatoren sind dabei Verbindungen zu verstehen, die die Effektivität der Abbeizmittel erhöhen. Säureaktivatoren, wie Phenole, Phosphorsäure, Essigsäure, Ameisensäure und/ oder Zitronensäure werden vorzugsweise eingesetzt wenn Anstriche vom Epoxid-Typ entfernt werden sollen. Stark alkalische Aktivatoren werden beispielsweise zur Entfernung von Latexfarben verwendet. Andere Aktivatoren sind beispielsweise Ammonium, Monoethylamin, N-phenyldiethanolamin.

**Verdickungsmittel** sind beispielsweise Polysaccharide, insbesondere Xanthan-Gum, Guar-Guar, Agar-Agar, Alginate und Tylosen, Carboxymethylcellulose und Hydroxyethylcellulose, ferner höhermolekulare Polyethylenglycolmono- und - diester von Fettsäuren, Polyacrylate, Polyvinylalkohol und Polyvinylpyrrolidon, Tenside wie beispielsweise Fettalkoholethoxylate mit eingeengter Homologenverteilung oder Alkyloligoglucoside sowie Elektrolyte wie Kochsalz und Ammoniumchlorid.

Als **Korrosionsinhibitoren** können die üblichen bekannten Inhibitoren, wie beispielweise Chelate, Chromverbindungen, Kupferverbindungen, Aminderivate, wie auch Polyaminderivate eingesetzt werden, insbesondere durch Kombination verschiedener Inhibitoren können synergistische Effekte erreicht werden.

Erfindungsgemäß sollten primär nicht kennzeichnungspflichtige Komponenten eingesetzt werden. Ein weiterer Vorteil bei Verwendung von Fettsäurealkylestern in Abbeizmitteln liegt darin, daß die üblicherweise zuzusetzenden Verdampfungsverzögerer nicht erforderlich sind.

Ein weiterer Gegenstand der vorliegenden Erfindung betrifft Abbeizmittel, enthaltend Fettsäureniedrigalkylester, vorzugsweise Fettsäuremethylester in Mengen von 70 bis 90 Gew.-% sowie ein Lösungsmittel ausgewählt aus der Gruppe, die gebildet wird von niederen Alkoholen, wie beispielsweise Methanol, Ethanol oder Propanol, Kohlenwasserstoffen und/ oder vorzugsweise DMSO in Mengen von 10 bis 20 Gew.-%, wobei sowohl ein einziges als auch Mischungen von Lösungsmitteln verwendet werden können. Daneben kann ein erfindungsgemäßes Abbeizmittel gegebenenfalls noch 0 bis 7, vorzugsweise 3 bis 5 Gew.-% eines Emulgators, ausgewählt aus der Gruppe der nichtionogenen, ampholytischen und/ oder zwitterionischen grenzflächenaktive Verbindungen sowie 0 bis 7, vorzugsweise 2 bis 5 Gew.-% eines Verdickungsmittels enthalten. Je nach Anwendungsgebiet können noch weitere übliche Inhaltsstoffe enthalten sein.

### Beispiele

### Beispiel 1

Verschieden Abbeizmittel, enthaltend Rapsmethylester sowie zum Vergleich ein Abbeizmittel enthaltend ausschließlich DMSO wurden in Ihrer Abbeizwirkung nach verschiedenen Zeiten (1 bis 24 Stunden) verglichen. Die Bewertung erfolgte visuell bzw. manuell durch Abbeizversuche. Die Einteilung punktuell und Film unterscheidet zwischen einer örtlich begrenzten Wirkung (punktuell) und einer Wirkung, die sich flächenmäßig ausdehnt (Film). Als zunehmend positive Wirkung wäre die Skala von - punktuell bis +++ Film einzuteilen, wobei - punktuell für keinerlei Wirkung steht und +++ Film für eine sehr gute und leichte Ablösung der gesamten Farbschicht.

| Abbeizen von Farbschichten auf Hartfaserplatten | | | | |
|---|---|---|---|---|
| | Rapsmethylester | Rapsmethylester + 10 Gew.-% Methanol | Rapsmethylester + 10 Gew.-% DMSO | DMSO |
| 1h | +/- punktuell | +/- punktuell | +/- punktuell | + punktuell |
| 2h | + punktuell | + punktuell | ++ punktuell | ++ punktuell |
| 4h | +++ punktuell | +++ punktuell | +++ punktuell | +++ punktuell |
| 6h | + Film | + Film¹ | + Film | +++ punktuell |
| 24h | ++ Film | ++ Film | ++ Film | + Film¹ |

| | | | | |
|---|---|---|---|---|
| ¹ in diesen beiden Fällen ist der Film jedoch äußerst schwer abzulösen | | | | |

### Beispiel 2

| Entfernung einer Acrylfarbe von Glas | |
|---|---|
| Abbeizmittel | Effekt |
| Methylenchlorid | Keine abbeizende Wirkung, verdampft sofort |
| Rapsmethylester | Selbst nach 24 h noch feucht, guter Abbeizeffekt |
| Rapsmethylester + 10 Gew.-% Methanol | Selbst nach 24 h noch feucht, guter Abbeizeffekt |

## Patentansprüche

1. Abbeizmittel, enthaltend
(a) 70 bis 90 Gew.-% Fettsäureniedrigalkylester der Formel (I),
**R**^{**1**}**CO-OR**^{**2**} (I)
in der R¹CO für einen linearen oder verzweigten, gesättigten und/ oder ungesättigten Alkylrest mit 6 bis 22 Kohlenstoffatomen und R² für einen linearen oder verzweigten Alkylrest mit 1 bis 8 Kohlenstoffatomen steht, und
(b) 10 bis 20 Gew.-% Lösungsmittel ausgewählt aus der Gruppe, die gebildet wird von niederen Alkoholen, Kohlenwasserstoffen und/oder Dimethylsulfoxid.

2. Mittel nach Anspruch 1, **dadurch gekennzeichnet, daß** sie als Komponente (a) Fettsäuremethylester enthalten

3. Mittel nach den Ansprüchen 1 oder 2, **dadurch gekennzeichnet, daß** sie als Komponente (b) Methanol, Ethanol oder Propanol enthalten.

4. Mittel nach mindestens einem der Ansprüche 1 bis 3, **dadurch gekennzeichnet, daß** sie weiterhin als Komponente (c) bis zu 7 Gew.-% Emulgatoren enthalten.

5. Mittel nach Anspruch 4, **dadurch gekennzeichnet, daß** sie als Komponente (c) nichtionische, ampholytische und/oder zwitterionischen grenzflächenaktive Verbindungen enthalten.

6. Mittel nach mindestens einem der Ansprüche 1 bis 4, **dadurch gekennzeichnet, daß** sie weiterhin als Komponente (d) bis zu 7 Gew.-% Verdickungsmittel enthalten.

## Claims

1. Scouring compositions containing
(a) 70 to 90% by weight of fatty acid lower alkyl esters corresponding to formula (I):
R¹CO-OR² (I)
in which R¹CO is a linear or branched, saturated and/or unsaturated alkyl group containing 6 to 22 carbon atoms and R² is a linear or branched alkyl group containing 1 to 8 carbon atoms and
(b) 10 to 20% by weight of solvents selected from the group consisting of lower alcohols, hydrocarbons and/or dimethyl sulfoxide.

2. Compositions as claimed in claim 1, **characterized in that** they contain fatty acid methyl esters as component (a).

3. Compositions as claimed in claim 1 or 2, **characterized in that** they contain methanol, ethanol or propanol as component (b).

4. Compositions as claimed in at least one of claims 1 to 3, **characterized in that** they additionally contain up to 7% by weight of emulsifiers as component (c).

5. Compositions as claimed in claim 4, **characterized in that** they contain nonionic, ampholytic and/or zwitterionic surface-active compounds as component (c).

6. Compositions as claimed in at least one of claims 1 to 4, **characterized in that** they additionally contain up to 7% by weight of thickeners as component (d).

## Revendications

1. Agent de décapage contenant :
a) de 70 à 90 % en poids d'ester d'alkyle inférieur d'acide gras de formule (I)
R¹CO-OR² (I)
dans laquelle R¹CO représente un reste alkyle linéaire ou ramifié, saturé et/ou non saturé ayant de 6 à 22 atomes de carbone et R² représente un reste alkyle linéaire ou ramifié ayant de 1 à 8 atomes de carbone et
b) de 10 à 20 % en poids de solvant choisi dans le groupe formé: des alcools inférieurs, des hydrocarbures et/ou du diméthylsulfoxyde.

2. Agents selon la revendication 1,
**caractérisés en ce qu'**
ils contiennent comme composant (a) un ester méthylique d'acide gras.

3. Agents selon la revendication 1 ou 2,
**caractérisés en ce qu'**
ils contiennent comme composant (b) du méthanol, de l'éthanol ou du propanol.

4. Agents selon au moins une des revendications 1 à 3,
**caractérisés en ce qu'**
ils contiennent en outre en tant que composants (c) jusqu'à 7 % d'agents émulsionnants.

5. Agents selon la revendication 4,
**caractérisés en ce qu'**
ils contiennent comme composants (c), des composés actifs sur la couche limite non ioniques, ampholytiques, et/ou zwitterioniques.

6. Agents selon au moins une des revendications 1 à 4,
**caractérisés en ce qu'**
ils contiennent en outre comme composant (d) jusqu'à 7 % en poids d'agent épaississant.
